(19) **Europäisches Patentamt / European Patent Office / Office européen des brevets**

(11) **EP 4 667 872 A1**

(12) # EUROPEAN PATENT APPLICATION

(43) Date of publication:
**24.12.2025  Bulletin 2025/52**

(21) Application number: **24183854.9**

(22) Date of filing: **21.06.2024**

(51) International Patent Classification (IPC):
**G01C 21/16** (2006.01)   **G01C 23/00** (2006.01)
**G05D 1/00** (2024.01)

(52) Cooperative Patent Classification (CPC):
**G01C 21/16; G01C 23/005; G05D 1/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Flare Bright Ltd**
**Westcott Buckinghamshire HP18 0XB (GB)**

(72) Inventors:
• **FURSE, Gabriel**
  **Aylesbury HP18 0XB (GB)**
• **RIDER, Conrad**
  **Aylesbury HP18 0XB (GB)**
• **SEQUEIRA, Carl**
  **Aylesbury HP18 0XB (GB)**

(74) Representative: **White, Andrew John et al**
**Mathys & Squire**
**The Shard**
**32 London Bridge Street**
**London SE1 9SG (GB)**

(54) **COMPUTER-IMPLEMENTED METHODS FOR ATTITUDE DETERMINATION OF AN AIRCRAFT FOR NAVIGATION**

(57)    A computer-implemented method is provided for determining attitude of an aircraft for navigation, in particular for autonomous or semi-autonomous aircrafts for use in GNSS-denied or jammed environments. The method comprises obtaining an indication of aircraft acceleration from an accelerometer, obtaining an indication of aircraft angular velocity from a gyroscope, and obtaining an indication of fluid velocity around and/or over the aircraft. Based on these indications, the upwards direction in body frame may be determined for the aircraft, wherein the upwards direction is defined relative to Earth's horizon. The attitude of the aircraft may then also be determined for navigation, based on the identified upwards direction in the aircraft body frame.

FIG. 2

**Description**

Field of the invention

The present disclosure relates to a computer-implemented method for attitude determination of an aircraft for navigation, in particular a method for determining the upwards direction based on indications from an inertial measurement unit (IMU), for example for use in GNSS denied or jammed environments.

Background

Attitude estimation is crucial for inertial navigation systems. It is particularly important for autonomous aircrafts, such as unmanned aerial vehicles (UAVs), where the aircraft is configured to dynamically adjust, reorientate, or adapt its own course, without any control input from an operator or user, based on the attitude estimation.

However, traditional methods of integrating gyroscope measurements to estimate attitude suffer from drift over time and are unsuitable for anything but short duration flights due to the lack of absolute attitude fixes. This can cause accumulating attitude errors throughout flights, and in worst case scenarios, cause the aircraft to crash.

Other systems rely on GPS or other GNSS systems to correct attitude estimates; however these approaches are unsuitable for use in GNSS denied or jammed environments.

There is therefore a need to provide improved attitude determination techniques for improved aircraft navigation, without reliance on GPS.

Summary of the invention

Aspects of the invention are as set out in the independent claims and optional features are set out in the dependent claims. Aspects of the invention may be provided in conjunction with each other and features of one aspect may be applied to other aspects.

An aspect of the invention relates to a computer-implemented method for determining attitude of an aircraft for navigation, the method comprising:

>    obtaining an indication of aircraft acceleration from an accelerometer;
>    obtaining an indication of aircraft angular velocity from a gyroscope;
>    obtaining an indication of fluid velocity around and/or over the aircraft;
>    determining an upwards direction, relative to Earth, in body frame for the aircraft, based on the indication of aircraft acceleration, the indication of aircraft angular velocity, and the indication of fluid velocity; and
>    determining attitude of the aircraft for navigation, based on the determined upwards direction.

This method of determining aircraft attitude may be advantageous as it is not reliant on any Global Navigation Satellite Systems (GNSS), such as GPS (Global Positioning System). This may advantageously allow the aircraft to operate in GNSS denied or jammed environments. It may also advantageously reduce accuracy errors associated with GNSS-based approaches, which are often worsened for small aircrafts, such as unmanned aerial vehicles (UAVs).

The method may further comprise obtaining an indication of heading angle of the aircraft; and determining the attitude of the aircraft for navigation, based on the determined upwards direction and the heading angle. The indication of heading angle of the aircraft may be obtained from a magnetometer, however the skilled person will understand that this is not limiting.

Determining the upwards direction in body frame for the aircraft may be based on determining resultant acceleration of the aircraft in body frame based on the indication of aircraft angular velocity and the indication of fluid velocity. This may be advantageous because it determines body frame resultant acceleration with no dependence on current or past attitude.

Determining the upwards direction in body frame for the aircraft may comprise using the formula:

$$up \approx a_{acc} + \dot{F}v + \omega \times Fv$$

wherein $up$ is the upwards direction in body frame, $a_{acc}$ is the indication of aircraft acceleration, $Fv$ is the indication of fluid velocity, $\dot{F}v$ is the indication of fluid velocity differentiated with respect to time, and $\omega$ is the indication of aircraft angular velocity. This may be advantageous because it determines the upwards direction with no dependence on current or past attitude.

Determining the upwards direction in body frame for the aircraft may comprise using the formula:

$$up^n \approx a_{acc}^n + \frac{1}{2dt}(Fv^{n-2} - 4Fv^{n-1} + 3Fv^n) + \omega^n \times Fv^n$$

wherein $up$ is the upwards direction in body frame, $a_{acc}$ is the indication of aircraft acceleration, $Fv$ is the indication of fluid velocity, and $\omega$ is the indication of aircraft angular velocity, $n$ is a discrete time step, and dt is the difference between time steps. As above, this may be advantageous because it determines the upwards direction with no dependence on current attitude.

The method may further comprise correcting gyroscope drift based on the determined upwards direction in body frame. Inertial navigation using gyroscopes typically suffers from drift over time due to a lack of an absolute measurement of attitude. The present method of determining attitude of an aircraft may be advantageous for correcting for the gyroscope drift, and thereby improving inertial navigation.

Obtaining the indication of fluid velocity around and/or over the aircraft may comprise obtaining a three-dimensional indication of fluid velocity.

In some examples, obtaining the indication of fluid velocity may comprise determining a fluid velocity estimate based on a sensor measurement indicative of at least one acceleration of the aircraft. For example, the fluid velocity estimate may be determined according to the methods set out in EP4328595. For example, the method may comprise determining a fluid flow estimate vector corresponding to the acceleration, or force, based on an inverted Fluid Flow to Force mapping function. The mapping function may be trained based on one or more training datasets and the fluid flow estimate vector is indicative of a fluid flow affecting the aircraft. For example, the inverted Fluid Flow to Force mapping function may be represented by a Force-Flow look-up table, wherein determining the fluid flow estimate vector further comprises referencing the Force-Flow look-up table based on the acceleration, or force, to determine the corresponding fluid flow estimate vector.

However, the skilled person will understand that the indication of fluid velocity may be obtained by any other known means, for example based on measurements obtained by a pitot tube.

The indication of aircraft acceleration and/or the indication of aircraft angular velocity may be obtained from an inertial measurement unit, IMU, on the aircraft.

The method may further comprise sending the determined attitude of the aircraft to a navigation unit.

In some examples, the method may further comprise controlling navigation of the aircraft based on the determined attitude.

In another aspect of the invention, there is provided a computer program product comprising instructions configured to program a programmable processor to perform the method of the preceding aspect of the invention.

Drawings

Embodiments of the disclosure will now be described, by way of example only, with reference to the accompanying drawings, in which:

Fig. 1 shows a box schematic of an example inertial navigation system of the present invention for an aircraft, preferably an autonomous or semi-autonomous aircraft.

Fig. 2 shows an example schematic of forces acting on an aircraft, such as a drone.

Fig. 3 shows a flow diagram of an example method of the present invention, for example for use with an inertial navigation system of an aircraft, such as that of Fig. 1.

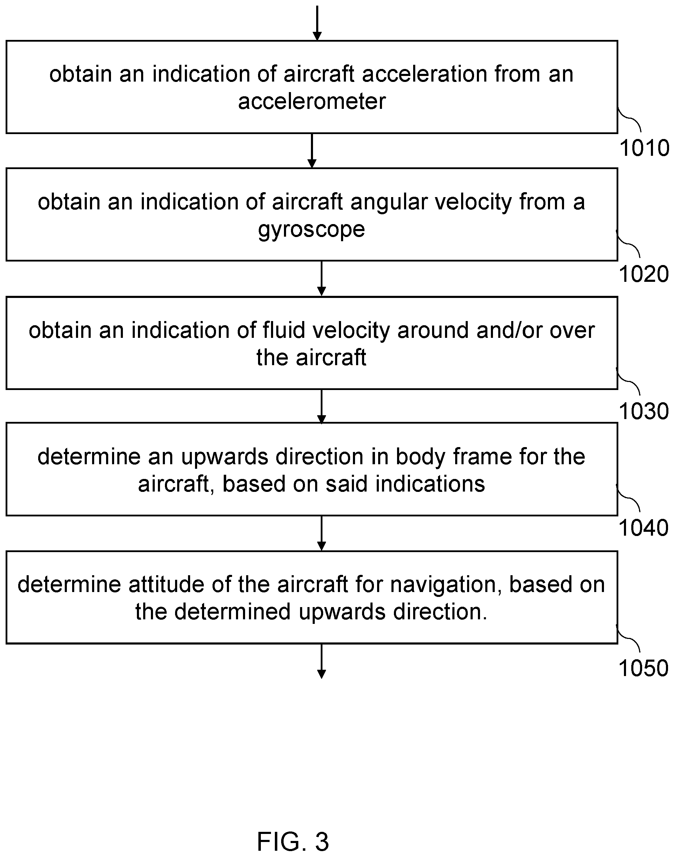

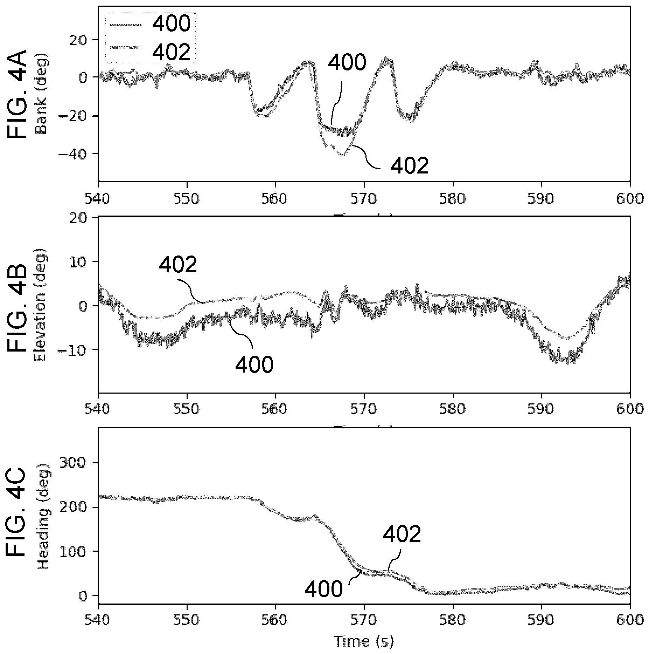

Figs. 4A to 4C show flight test data output by the method of Fig. 3, compared to test data output by a GPS-based inertial navigation system. In particular, Fig. 4A depicts the bank angle (or roll angle relative to the horizon) over time, determined independently by each system during the same flight. Fig. 4B depicts the elevation angle (or pitch angle relative to the horizon) over time, determined independently by each system during the same flight. Fig. 4C depicts the heading angle over time, determined independently by each system during the same flight. These three outputs (bank, elevation, and heading angle) are used to define the attitude of the aircraft.

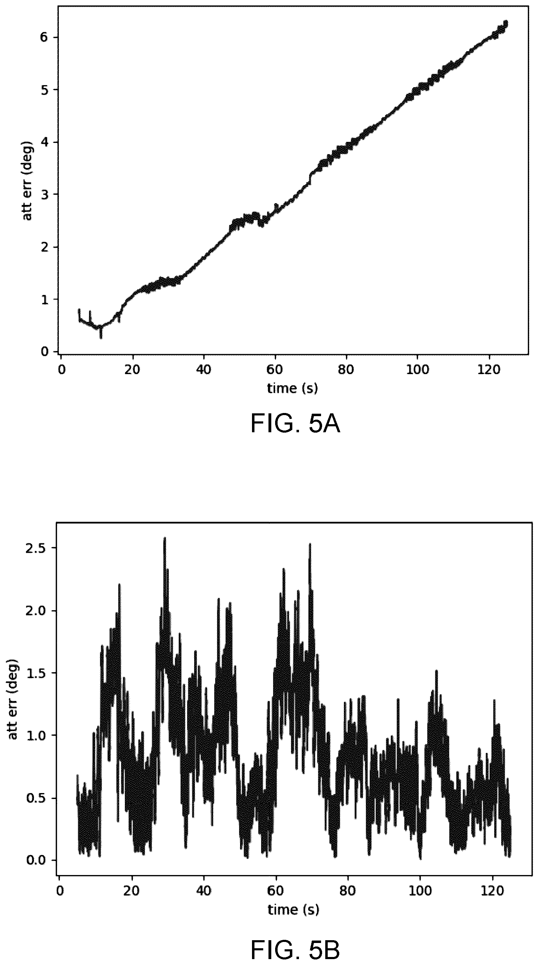

Figs. 5A to 5B show attitude error in test data obtained by simulating flights for both a traditional inertial navigation system reliant on only gyroscope measurements, and an inertial navigation system executing the method of Fig. 3. In particular, Fig. 5A shows the attitude error in simulation test data output by an inertial navigation system reliant on gyroscope measurements only to determine attitude. Fig. 5B shows the attitude error in simulation test data output by an inertial navigation system executing the method of the present invention, reliant on both accelerometer and gyroscope measurements to determine attitude.

Specific description

Aircraft attitude is typically understood as the aircraft orientation relative to the horizontal plane (i.e., the Earth horizon). This includes the pitch angle (or elevation), and the roll angle (or bank). Aircraft attitude can also incorporate the yaw angle (or heading) to fully define aircraft orientation, using the three angles. The three-angle attitude (elevation/pitch, bank/roll, and heading/yaw) may be quantified as a quaternion or a rotation matrix.

The "upwards direction" or "up direction" is intended to refer to the upwards direction relative to the Earth horizon, for example wherein the upwards direction is opposite to the direction of gravity. However, for use in flight navigation, the present invention aims to determine the upwards direction in the body frame of the aircraft. This is important as aircraft attitude can be fully specified based on the determination of two Earth frame directions in body frame, for example namely "up" and "north" directions.

Earth frame refers to a coordinate system that has an origin fixed in the reference frame of the Earth. In particular, the origin is often arbitrary and fixed relative to the surface of the Earth. As an example, the $x_E$ axis is often defined in the direction of north, the $y_E$ axis often in the direction of east, and the $z_E$ axis towards the centre of the Earth. Generally, and for the purposes of the present invention, the Earth frame is assumed to be inertial with a flat $x_E,y_E$-plane, however the skilled person will understand that the Earth frame can also be considered a spherical coordinate system with origin at the centre of the Earth.

The body frame of an aircraft refers to a coordinate system that has an origin body-fixed to the aircraft, such that the origins move along with the aircraft. Typically, the origin is at the centre of gravity of the aircraft. As an example, for an aircraft that is symmetric from right-to-left, the body frame can be defined as having its origin at the aircraft centre of gravity, the $x_b$ axis out the front (or "nose") of the aircraft in the plane of symmetry of the aircraft, the $z_b$ axis perpendicular to the $x_b$ axis, in the plane of symmetry of the aircraft (often, but not exclusively, positive below the aircraft), and the $y_b$ axis perpendicular to the $x_b,z_b$-plane, for example in the direction of the wings.

The relative orientation of the body frame and Earth frame can be expressed in a variety of forms, including but not limited to rotation matrices, direction cosines, Euler angles, and quaternions. These can be used to define the attitude of an aircraft.

Embodiments of the claims relate to computer-implemented methods for determining attitude of an aircraft for navigation, in particular for determining the upwards direction of the aircraft for navigation and/or control.

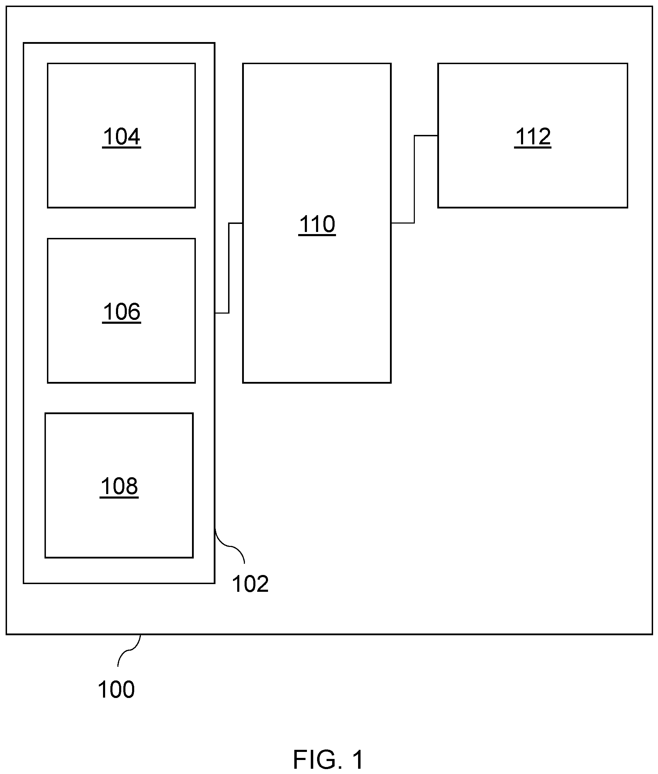

Fig. 1 shows a box diagram of an example aircraft 100, such as but not limited to an autonomous or semi-autonomous aircraft, such as an unmanned aerial drone. The aircraft 100 comprises an inertial measurement unit, IMU, 102. The IMU 102 comprises an accelerometer 104, a gyroscope 106, and a magnetometer 108.

The aircraft 100 further comprises a controller 110. The IMU 102 is configured to communicate with the controller 110.

The aircraft 100 also comprises a navigation module 112. The controller 110 is configured to communicate with the navigation module 112.

Accelerometers, such as accelerometer 104, are configured to measure acceleration relative to free fall. For example when sat on the bench, an accelerometer will read a value vertically upwards in Earth frame. This means that in a stationary aircraft, such as aircraft 100, a measurement of the direction of gravity in body frame (i.e. the downwards direction) can be obtained. In combination with a heading estimate, for example from magnetometer 108, these two directions fully specify the attitude of an aircraft.

To use this in flight, any other accelerations felt by the accelerometer 104 must be compensated for before estimating the up direction from the resistance to free fall in flight. This is referred to as accelerometer movement compensation.

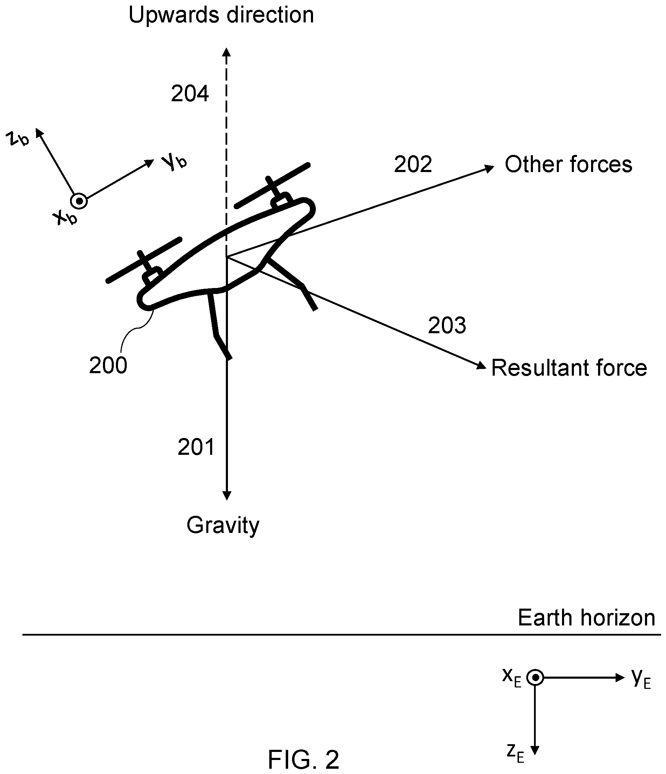

Since accelerometers, such as accelerometer 104, are measuring relative to free fall, the accelerometer reading corresponds to the 'other forces' arrow 202 in Fig. 2. Therefore if the resultant force 203 on the aircraft 100 is known, the upwards direction 204, *up,* can be determined by:

$$up = a_{acc} - a_{total}$$

where $a_{acc}$ is an accelerometer reading (corresponding to force 202), and $a_{total}$ is the resultant acceleration (corresponding to resultant force 203) on the aircraft 100 in body frame. Interchanging between forces and accelerations is possible due to constant mass of the aircraft 100 (Force = mass x acceleration).

As described herein, body frame resultant acceleration of the aircraft, $a_{total}$, can be derived based on fluid velocity estimates. The advantage of this approach is that it works independently of current attitude estimation error, assuming an attitude independent measurement of body frame fluid velocity.

Using the dot notation to represent a derivative with respect to time, and subscripts E and *b* to represent Earth frame and body frame respectively, the following expression can be derived for body frame resultant acceleration.

Starting from the definition of fluid velocity, the following body frame equation is provided:

$$F_{v_b} = R(w_E - \dot{x}_E) \qquad (1)$$

where $w$ is the wind, $x$ is position, $\dot{x}$ is velocity, and $R$ is the rotation matrix taking Earth frame to body frame. Each term is implicitly dependent on time.

Differentiating both sides of the above with respect to time gives the following:

$$\dot{F}_{v_b} = R\dot{w}_E + \dot{R}w_E - R\ddot{x}_E - \dot{R}\dot{x}_E \qquad (2)$$

Rearranging for body frame acceleration, $R\ddot{x}_E$ or $a_{total}$, the following can be derived:

$$R\ddot{x}_E = -\dot{F}_{v_b} + \dot{R}(w_E - \dot{x}_E) + R\dot{w}_E \qquad (3)$$

The time derivative of the rotation matrix is taken to be:

$$\dot{R} = -[\omega_b]_\times R \qquad (4)$$

where $\omega$ is the angular velocity, and $[a]_\times$ is the matrix such that $[a]_\times b = a \times b$. Angular velocity may be obtained by an aircraft gyroscope, for example as part of the aircraft inertial measurement unit, IMU.

This therefore allows the body frame acceleration, $R\ddot{x}_E$, to be expressed as below:

$$R\ddot{x}_E = -\dot{F}_{v_b} - [\omega_b]_\times R(w_E - \dot{x}_E) + R\dot{w}_E$$
$$= -\dot{F}_{v_b} - [\omega_b]_\times F_{v_b} + R\dot{w}_E$$
$$= -\dot{F}_{v_b} - \omega_b \times F_{v_b} + R\dot{w}_E \qquad (5)$$

The wind term, $R\dot{w}_E$, can be considered as random noise, $\varepsilon$, under the assumption that the wind fluctuates randomly over time, i.e., $\dot{w}_E \approx 0$.

This leads to the final expression for body frame total acceleration:

$$R\ddot{x}_E = -\dot{F}_{v_b} - \omega_b \times F_{v_b} + \epsilon \qquad (6)$$

This expression has no dependence on the current attitude, R.

Substituting this into the first equation for the up direction, the following expression can be derived:

$$up = a_{acc} + \dot{F}_{v_b} + \omega_b \times F_{v_b} + \epsilon \qquad (7)$$

It is also now entirely in body frame and so the frame subscripts can be dropped, and the noise term can be dropped:

$$up \approx a_{acc} + \dot{F}_v + \omega \times F_v \qquad (8)$$

The time derivative of fluid velocity, $\dot{F}_v$, can be approximated with a backwards finite difference method. For example, a second order backwards finite difference may be used, given by:

$$f'(x) \approx \frac{f(x-2h) - 4f(x-h) + 3f(x)}{2h} \qquad (9)$$

Moving to discrete time with the time step denoted by a superscript $n$, and the difference between timesteps denoted as dt, we can therefore arrive at the following:

$$up \approx a_{acc}^n + \frac{1}{2dt}\left(F_v^{\,n-2} - 4F_v^{\,n-1} + 3F_v^{\,n}\right) + \omega^n \times F_v^{\,n} \qquad (10)$$

This expression can therefore be computed based on an accelerometer reading, $a_{acc}^n$; a history of fluid velocity estimates, $F_v^{n-2}$, $F_v^{n-1}$, $F_v^n$; and a gyroscope reading, $\omega^n$, for example based on an inertial measurement unit, IMU.

Fig. 3 illustrates an example method of the present invention in use. Firstly, the controller 110 obtains an indication of aircraft acceleration from accelerometer 104 (1010) and an indication of aircraft angular velocity from the gyroscope 106 (1020) for a given point in time.

The controller 110 also obtains an indication of fluid velocity around the aircraft (1030). Preferably, the indication of fluid velocity ($F_v^{n-2}$, $F_v^{n-1}$, $F_v^n$) is obtained according to the methods set out in EP4328595. In particular, the fluid velocity estimates may be obtained based on determining a force on the aircraft 100 based on obtained sensor measurement(s) indicative of at least one acceleration of the aircraft, for example from the accelerometer 104, and determining a fluid flow estimate vector corresponding to the determined force based on an inverted Fluid Flow to Force mapping function. The mapping function may be trained based on one or more training datasets and the fluid flow estimate vector is indicative of a fluid flow affecting the aircraft 100. For example, the inverted Fluid Flow to Force mapping function may be represented by a Force-Flow look-up table, wherein determining the fluid flow estimate vector further comprises referencing the Force-Flow look-up table based on the determined force to determine the corresponding fluid flow estimate vector. This approach may be advantageous as it means equation 10 can be computed using readings from the aircraft accelerometer 104 and gyroscope 106 alone.

However, the skilled person will understand that the indications of fluid velocity, $F_v^{n-2}$, $F_v^{n-1}$, $F_v^n$, may alternatively or in addition be obtained by any other known methods, for example but not limited to based on flow sensors, such as pitot tubes.

Once indications of aircraft acceleration, angular velocity, and fluid velocity have been obtained, the controller 110 then determines the upwards direction 204 in body frame for the aircraft 100, based on said indications (1040).

In particular, the controller 110 is configured to determine the up direction for a point in time, n, based on the equation:

$$up \approx a_{acc}^n + \frac{1}{2dt}\left(F_v^{\,n-2} - 4F_v^{\,n-1} + 3F_v^{\,n}\right) + \omega^n \times F_v^{\,n}$$

where $a_{acc}^n$ is based on the indication of acceleration obtained from the accelerator 104; $F_v^{n-2}$, $F_v^{n-1}$, $F_v^n$ are based on the obtained indications of fluid velocity overtime, and $\omega^n$ is based on the indication of angular velocity obtained from the gyroscope 106.

The controller 110 may then determine the attitude of the aircraft 100 for navigation, based on the determined upwards direction 204 in the body frame (1050).

In particular, the controller 110 uses the determined upwards direction 204 in the body frame to determine the rotation between the body frame and the Earth frame in order to determine the roll (or bank) and pitch (or elevation) of the aircraft 100 relative to the Earth frame.

The controller 110 may also determine an indication of the aircraft 100 yaw angle, for example based on obtaining an indication from the magnetometer 108. The indication from the magnetometer 108 may be representative of the aircraft heading angle.

The controller 110 can then output the determined roll, pitch, and yaw angles of the aircraft 100 to fully define the orientation of the aircraft 100, thereby specifying the aircraft's attitude. Alternatively, the up direction and heading estimate may be input into an attitude extended kalman filter equation (EKF) to output the aircraft attitude.

In this example, the controller 110 can then output the aircraft attitude to the navigation module 112. The navigation module 112 uses the aircraft attitude to determine the location and orientation of the aircraft 100 relative to the desired navigation course.

For autonomous or semi-autonomous aircrafts, the navigation module 112 may also determine whether adjustments are required to get the aircraft 100 onto the correct navigation course. In the event that adjustments are required, the navigation module and/or controller 110 may be configured to send control signals to a flight controller (not shown) of the aircraft 100 based on the determined aircraft attitude relative to the desired navigation course, wherein the flight controller is configured to control the flight of the aircraft 100.

The above method is repeated at time intervals across the duration of flight to continually update the aircraft attitude used for navigation.

This approach prevents attitude drift and reduces error propagation over time as the aircraft control and navigation is not dependent on previously computed aircraft attitude measurements. This is because the equation:

$$up \approx a_{acc}^{n} + \frac{1}{2dt}\left(F_v{}^{n-2} - 4F_v{}^{n-1} + 3F_v{}^{n}\right) + \omega^n \times F_v{}^{n}$$

has no dependence on previous up directions, or previous rotation matrices.

*Test data*

To assess the accuracy of the method disclosed herein, a series of flights were performed using a 2-metre wingspan fixed wing drone, namely an ATMOS-8 drone, with an auxiliary controller executing the attitude estimation method of the present invention as discussed above in relation to Fig. 3, passively in the background. This means the auxiliary controller executing the method of Fig. 3 was decoupled from the flight controller for the purposes of these test flights. The flights were approximately 45 minutes in duration. The attitude estimate derived from the current method is compared to an attitude estimate provided by Cube Orange which relies on GPS. It is acknowledged that the estimate relying on GPS is an estimate provided for comparison and does not represent perfect ground truth data, however the attitude estimate provided by Cube Orange is provided by way of comparison as this is representative of existing methods of determining attitude estimates which rely on GPS systems. In particular, Cube Orange is an onboard flight controller and produces navigation estimates utilising IMU and GPS sensors. The passive navigation system of the present invention utilised the same IMU measurements during the tests as the Cube Orange controller, however it did not use the GPS measurements. This is advantageous as the present method has the advantage of being usable in GNSS denied or jammed environments.

As described above, the attitude estimation method of the present invention used for the test, determines the absolute attitude based on first determining the up direction using the formula:

$$up^n \approx a_{acc}^{n} + \frac{1}{2dt}(Fv^{n-2} - 4Fv^{n-1} + 3Fv^n) + \omega^n \times Fv^n$$

Based on this, the absolute attitude can be calculated, as described above, according to Fig. 3.

The test data is shown in Figs. 4A to 4C. Fig. 4A depicts the bank angle (or roll angle relative to the horizon) over time, determined independently by the Cube Orange GPS controller and the controller executing the method of the present invention during the same flight. Fig. 4B depicts the elevation angle (or pitch angle relative to the horizon) over time, determined independently by the Cube Orange GPS controller and the controller executing the method of the present invention during the same flight. Fig. 4C depicts the heading angle over time, determined independently by the Cube Orange GPS controller and the controller executing the method of the present invention during the same flight. These three outputs (bank, elevation, and heading angle) are used to define the attitude of the aircraft. In each of Figs. 4A to 4C, line 400 represents the output determined by the controller executing the method of the present invention, and line 402 represents the output determined by the Cube Orange GPS controller.

The dynamic behaviour of the attitude estimate obtained via the method of the present invention is illustrated in Figs. 4A to 4C which closely follow the output of the Cube Orange GPS system. This therefore demonstrates that the present method is responsive to real flight behaviours.

This data also demonstrates that the method of the present invention does not suffer from increasing error over time. This is because the method of the present invention does not rely on 'average' flight behaviour to determine the attitude estimate.

It has accordingly been shown in simulation that the attitude estimation method of the present invention can be used within a fully autonomous control and navigation system, without contributing to a feedback loop.

By contrast, when a traditional inertial navigation system which relies on average flight behaviour for attitude estimation is coupled to an autonomous control system, the aircraft attitude will have at best linear error growth in attitude estimate error. This is because said inertial navigation system creates a feedback loop with the control system, which compounds error accumulation and can cause the autonomous aircraft to spin out of control and crash.

In simulation testing, the system of the present invention is tested in comparison with a traditional inertial navigation system based on gyroscope measurements only, by batch performance of 2-minute spiral flights. These are done with random accelerometer and gyroscope bias, and with the flow navigation disabled. The random accelerometer and gyroscope bias was matched in magnitude to real IMU data, namely gathered from an ICM20948 9-axis IMU.

Fig. 5A illustrates the attitude error output by the traditional inertial navigation system based on gyroscope measurements only. It is shown that the gyroscope-only inertial navigation system (INS) grows roughly linearly over time.

Fig. 5B illustrates the attitude error output by the simulation of the system of the present invention, based on accelerometer and gyroscope measurements as described above. By contrast, attitude error reduction does not appear to grow over time, but rather stays noisy but close to 0 throughout the duration of the flight simulation. This therefore demonstrates the significant attitude error reduction achieved by the method of the present invention, based on accelerometer and gyroscope measurements.

It will be appreciated from the discussion above that the embodiments shown in the Figures are merely exemplary, and include features which may be generalised, removed or replaced as described herein and as set out in the claims.

In the context of the present disclosure other examples and variations of the apparatus and methods described herein will be apparent to a person of skill in the art.

It will be appreciated in the context of the foregoing disclosure that the described embodiments are not to be construed as limiting. For example, with reference to the drawings in general, it will be appreciated that schematic functional block diagrams are used to indicate functionality of systems and apparatus described herein. It will be appreciated however that the functionality need not be divided in this way and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

The processor or controller 110 may be provided by one or more distributed services, configured to provide processing logic which performs the function of the processor 110 as described and claimed herein. In some examples the functionality of the controllers and processing means described herein (such as controller 110) may be provided by mixed analogue and/or digital processing and/or control functionality. It may comprise any general-purpose processor, which may be configured to perform a method according to any one of those described herein. In some examples the controller may comprise digital logic, such as field programmable gate arrays, FPGA, application specific integrated circuits, ASIC, a digital signal processor, DSP, or by any other appropriate hardware. In some examples, one or more memory elements can store data and/or program instructions used to implement the operations described herein.

Embodiments of the disclosure provide computer program products such as tangible, nontransitory storage media comprising program instructions operable to program a processor to perform any one or more of the methods described and/or claimed herein and/or to provide data processing apparatus as described and/or claimed herein. Such a controller may comprise an analogue control circuit which provides at least a part of this control functionality. An embodiment provides an analogue control circuit configured to perform any one or more of the methods described herein.

The above embodiments are to be understood as illustrative examples. Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims. These claims are to be interpreted with due regard for equivalents.

**Claims**

1. A computer-implemented method for determining attitude of an aircraft for navigation, the method comprising:

   obtaining an indication of aircraft acceleration from an accelerometer;
   obtaining an indication of aircraft angular velocity from a gyroscope; and
   obtaining an indication of fluid velocity around and/or over the aircraft; and
   determining an upwards direction, relative to Earth, in body frame for the aircraft, based on the indication of aircraft acceleration, the indication of aircraft angular velocity, and the indication of fluid velocity;
   determining attitude of the aircraft for navigation, based on the determined upwards direction.

2. The method of claim 1, further comprising:

   obtaining an indication of heading angle of the aircraft; and
   determining the attitude of the aircraft for navigation, based on the determined upwards direction and the heading angle.

3. The method of any preceding claim wherein determining the upwards direction in body frame for the aircraft is based on determining resultant acceleration of the aircraft in body frame based on the indication of aircraft angular velocity and the indication of fluid velocity.

4. The method of any preceding claim wherein determining the upwards direction in body frame for the aircraft comprises using the formula:

$$up \approx a_{acc} + \dot{Fv} + \omega \times Fv$$

wherein *up* is the upwards direction in body frame, $a_{acc}$ is the indication of aircraft acceleration, *Fv* is the indication of fluid velocity, $\dot{Fv}$ is the indication of fluid velocity differentiated with respect to time, and $\omega$ is the indication of aircraft angular velocity.

5. The method of any preceding claim wherein determining the upwards direction in body frame for the aircraft comprises using the formula:

$$up^n \approx a_{acc}^n + \frac{1}{2dt}(Fv^{n-2} - 4Fv^{n-1} + 3Fv^n) + \omega^n \times Fv^n$$

wherein *up* is the upwards direction in body frame, $a_{acc}$ is the indication of aircraft acceleration, *Fv* is the indication of fluid velocity, and $\omega$ is the indication of aircraft angular velocity, *n* is a discrete time step, and dt is the difference between time steps.

6. The method of any preceding claim further comprising correcting gyroscope drift based on the determined upwards direction in body frame.

7. The method of any preceding claim wherein obtaining the indication of fluid velocity around and/or over the aircraft comprises obtaining a three-dimensional indication of fluid velocity.

8. The method of any preceding claim wherein obtaining the indication of fluid velocity further comprises determining a fluid velocity estimate based on a sensor measurement indicative of at least one acceleration of the aircraft.

9. The method of any preceding claim wherein the indication of heading angle of the aircraft is obtained from a magnetometer.

10. The method of any preceding claim wherein the indication of aircraft acceleration and the indication of aircraft angular velocity are obtained from an inertial measurement unit, IMU, on the aircraft.

11. The method of any preceding claim further comprising controlling navigation of the aircraft based on the determined attitude.

12. The method of any preceding claim further comprising sending the determined attitude of the aircraft to a navigation unit.

13. A computer program product comprising instructions configured to program a programmable processor to perform the method of any preceding claim.

FIG. 1

FIG. 2

FIG. 3

FIG. 4A

FIG. 4B

FIG. 4C

FIG. 5A

FIG. 5B

| | Europäisches Patentamt<br>European Patent Office<br>Office européen des brevets | **EUROPEAN SEARCH REPORT** | **Application Number**<br><br>EP 24 18 3854 |
| --- | --- | --- | --- |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
| --- | --- | --- | --- |
| X | US 2022/282955 A1 (KEYES SALLY ANN [US] ET AL) 8 September 2022 (2022-09-08)<br>* paragraphs [0002], [0013], [0015], [0017], [0032], [0033] *<br>----- | 1-13 | INV.<br>G01C21/16<br>G01C23/00<br>G05D1/00 |
| X | EP 3 303 126 B1 (VERITY AG [CH]) 2 September 2020 (2020-09-02)<br>* paragraphs [0202] - [0220] *<br>----- | 1-13 | |

**TECHNICAL FIELDS SEARCHED (IPC)**

G01C
G05D

The present search report has been drawn up for all claims

| Place of search | Date of completion of the search | Examiner |
| --- | --- | --- |
| The Hague | 17 November 2024 | Nikoli, Revekka |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)

**EP 4 667 872 A1**

## ANNEX TO THE EUROPEAN SEARCH REPORT
## ON EUROPEAN PATENT APPLICATION NO.

EP 24 18 3854

17-11-2024

| Patent document cited in search report | | Publication date | Patent family member(s) | | Publication date |
|---|---|---|---|---|---|
| US 2022282955 | A1 | 08-09-2022 | CN | 115014335 A | 06-09-2022 |
| | | | EP | 4053504 A1 | 07-09-2022 |
| | | | US | 2022282955 A1 | 08-09-2022 |
| EP 3303126 | B1 | 02-09-2020 | CN | 107848623 A | 27-03-2018 |
| | | | EP | 3303126 A1 | 11-04-2018 |
| | | | HK | 1253680 A1 | 28-06-2019 |
| | | | JP | 6795197 B2 | 02-12-2020 |
| | | | JP | 2018516200 A | 21-06-2018 |
| | | | KR | 20180014034 A | 07-02-2018 |
| | | | US | 2018237148 A1 | 23-08-2018 |
| | | | US | 2020398994 A1 | 24-12-2020 |
| | | | US | 2024286751 A1 | 29-08-2024 |
| | | | WO | 2016193884 A1 | 08-12-2016 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4328595 A